# EUROPEAN PATENT APPLICATION

(11) **EP 2 175 410 A1**
(43) Date of publication of application: **14.04.2010**
(21) Application number: 09012645.9
(22) Date of filing: 06.10.2009
(51) Int. Cl.: G06Q 30/00, G06Q 10/00

(54) **Tariff management configuration automation**

(30) Priority: 06.10.2008 MY 0803957
(71) Applicant: Accenture Global Services GmbH, 8200 Schaffhausen (CH)
(72) Inventor: How, Adrian Envin, 52200 Kuala Lumpur (MY); Kua, Jasmine Mei Ping, 47810 Petaling Jaya Selangor (MY); Lau, Kin Yip, Cheras Kuala Lumpur (MY); Wong, Ming Hon, 55100 Kuala Lumpur (MY)
(74) Representative: Müller-Boré & Partner Patentanwälte

(57) **Abstract**

The present description refers in particular to a computer-implemented method and a computer system for generating a new tariff and/or billing configuration for a tariff and/or billing plan on a computer based system using an entity framework for a hierarchical arrangement of entities, the hierarchical arrangement representing a tariff and/or billing configuration, with each entity representing one or more characteristics of the configuration, the method including the step of:
populating the entity framework by copying an existing entity and/or generating a new entity.

## Description

### FIELD OF THE INVENTION

The present invention relates to a system and method, in particular, a computer implemented method, of generating data relating to products and/or services. The invention is particularly useful for generating configuration data relating to new tariff and/or billing plans for products and/or services for a telecommunication service provider thus allowing the generation of computer program code with respect to configurations.

### BACKGROUND OF THE INVENTION

The telecommunications industry is highly competitive and this has resulted in part from regulatory changes in most countries around the world seeking to deregulate the provision of telecommunication services. As the reform of the telecommunication services industries has evolved, consumers have been provided with an increasing number of products and services at a lower cost.

At the present time, the telecommunications industry worldwide is facing four major trends. Firstly, changing consumer requirements are evolving towards more personalized on-demand content and services. In the past, highly regulated telecommunications industries provided relatively few alternatives with respect to the packaging of products and/or services and consumers were required to select the most appropriate products and/or services from the relatively few offerings. However, with deregulation, the number of products and/or services has increased dramatically and consumers are displaying an increasing preference to group products and/or services according to their personal preferences. In this respect, the consumers' preferences include both the products and/or services that the consumer requires and the preferred billing arrangements for those products and/or services.

Secondly, with the increased competition in the industry, individual telecommunication service providers are competing for the available revenue of consumers. In addition to the telecommunication service providers competing with each other, increasingly these providers are required to compete for revenue with alternative business models such as Mobile Virtual Network Operators (MVNO's).

Thirdly, the rapid pace of developments in information technology and telecommunications technology is enabling telecommunication service providers to develop a common platform for building and integrating real-time, converged IP (Internet Protocol) and legacy services. As a result, telecommunication service providers increasingly need to take advantage of the developments in information technology in order to obtain increased efficiency with respect to the delivery of their products and/or services in order to remain competitive.

Fourthly, as the reform of telecommunications industries around the world continues, present "barriers to entry" to specific consumer markets will most likely not exist in the future. For example, cell phone number portability between telecommunication service providers is being mandated in various countries around the world to prevent consumers from being "locked-in" to a particular telecommunication service provider. This particular reform will allow a consumer to change telecommunication service provider without the loss of their cell phone number. Whilst the introduction of this reform may vary from country to country, there is a clear intention in most countries with well developed telecommunications services to provide consumers with portability such that they can elect to choose a new telecommunication service provider without the loss of their cell phone number (sometimes referred to as mobile number or handset number). Presently many consumers are discouraged from selecting a new telecommunication service provider, despite a new provider's efforts to offer less costly services, as the transition will require them to abandon their old cell phone number with the consequent requirement to advise all their contacts (family, friends and business associates) of their new cell phone number.

In any event, due to constantly changing consumer trends, regulatory shifts and intense competition, there is a need to frequently introduce new and innovative bill plans and promotions and to reduce the time-to-market for these services.

In view of the aforementioned emerging trends, telecommunication service providers must take action to preserve or increase the competitiveness of their offerings.

Presently, reacting to changing consumer requirements is particularly difficult for telecommunication service providers. The generation of configurations for new tariff and/or billing plans for products and/or services presents a difficult problem as it is necessary for a telecommunications service provider to generate, deploy and fully test a configuration for any new proposed tariff and/or billing plan before offering same to consumers. Having devised a new tariff and/or billing plan for products and/or services, it is necessary for the telecommunication service provider to deploy the proposed new plan configuration into multiple data bases. Further, having deployed newly devised configurations, it is necessary to fully test the new configurations across different accounts and service instances (for example, cell telephony, fixed line telephony and/or provision of an internet service) to ensure the tariff and/or billing configurations operate correctly and, if implemented, will invoice consumers accurately according to the published tariff and/or billing plan details.

Presently, the process of generating a configuration for a new tariff or billing plan, deploying and testing same is predominantly a manual process requiring operators of a high skill level to perform these tasks. In particular, it is usual when generating, deploying and testing a configuration for a new tariff and/or billing plan to require skilled staff to construct database scripts manually for the purpose of deploying and testing the configuration. Of course, the use of highly skilled personnel performing operations manually not only increases the cost but also contributes a substantial period of time in which to generate, deploy and fully test any proposed tariff and/or billing configuration.

Despite requiring operators to have a high level of skill and understanding with respect to the information technology systems and the test environments in which new tariff and billing plan configurations are generated, deployed and tested, the performance of operations manually gives rise to a high degree of human error which in turn further delays the progress of generating, deploying and testing a configuration for a new tariff and/or billing plan. For example, having devised a configuration for a new tariff and/or billing plan, which is usually embodied in the form of computer program code, it is generally necessary to deploy the program code representing the new tariff and/or billing configuration across all active data bases in a telecommunications system in order to maintain consistency with the existing configuration in the production environment. Generally, a telecommunications service provider will have established several environments for performing necessary functions such as a reporting environment, a testing environment and a back up environment for disaster recovery.

For some systems, it can be necessary to generate, deploy and test a configuration for a new tariff and/or billing plan which is configured across more than twenty (20) database tables, the database tables being in different databases and the databases being on different platforms. In configuring such a system, the operator(s) would require an in-depth knowledge of databases, including tables and their relationships.

If, during manual configuration, the operator fails to enter or correctly alter data in a table for a configuration, then the deployment of that configuration may fail, or the configuration may fail when testing the configuration after deployment. As the timeframe for generation, deployment and testing of a configuration for a tariff and/or billing plan can span several weeks, any such failures can be both time consuming and costly.

Another problem with manual configuration may be that a configuration, which has been only partially generated by an operator, could be lost and this would require generating the configuration from the beginning. In this situation time and money is wasted.

Having devised a new tariff and/or billing plan, it is necessary to generate, deploy and test the new configuration for the plan in a test environment before implementing same in a production environment. When operating within the test environment, deploying the computer program code to effect a configuration for a new tariff or billing plan generally requires an operator to deploy the computer program code to individual data bases in the test environment in a particular order to avoid errors. Further, these functions are generally performed by an operator executing detailed instructions from a UNIX server and hand keying text commands in order to execute the computer program code in the respective databases. Of course, such activities necessarily incur a degree of human error particularly in relation to ensuring that computer program code representing the new tariff or configuration plan is executed in the correct order and in relation to the correct databases.

Accordingly, in view of the previously mentioned emerging market trends there is a need for telecommunication service providers to reduce the time required to generate, deploy and test configurations for new tariff plans in order to facilitate the implementation of new tariff or billing arrangements. In turn, any improvement to the efficiency of this process will facilitate the attraction of new and/or existing consumers to a newly devised tariff or billing plan.

In the context of this overall requirement, there is a specific need to reduce the time presently required to generate configurations for new tariff and/or billing plans for products and/or services.

The reference to any prior art in this specification is not, and should not be taken as, an acknowledgement or any form or suggestion that the prior art forms part of the common general knowledge to those skilled in the relevant field of technology.

### SUMMARY OF THE INVENTION

In one aspect the present invention provides a method, in particular, a computer implemented method, of generating a new tariff and/or billing configuration for a tariff and/or billing plan on a computer based system by use of an entity framework for an hierarchical arrangement of entities, the hierarchical arrangement representing a tariff and/or billing configuration, with each entity having attributes representing one or more characteristics of the configuration, the method including the step of populating the entity framework by copying an existing entity and/or generating a new entity.

Advantageously, there is provided an improved man machine interaction, that enables customized computer program code to be generated in an easy and understandable manner. Hence, by the method according to the present invention, the user may be relieved from the mental task of establishing specific/customized computer program code. Accordingly, computer program code may be specifically designed for a given and/or predefined computing environment and generated in a simple and efficient manner.

In an embodiment, the step of populating the entity framework includes copying a plurality of existing entities and/or creating a new plurality of entities.

In another embodiment, the step of populating the entity framework includes copying an existing hierarchical arrangement of entities and/or creating a new hierarchical arrangement of entities.

In yet another embodiment, the method, in particular, the computer implemented method, further includes the step of creating and/or modifying one or more attributes of an entity. The method may further include the step of deleting an at least one child entity from a parent entity in the hierarchical arrangement of entities.

In a further embodiment, the method, in particular, the computer implemented method, includes the step of generating a configuration script for the new tariff and/or billing configuration represented by computer program code. The method may also include the step of validating a generated configuration.

In yet a further embodiment, the method, in particular, the computer implemented method, further includes the step of creating and/or modifying one or more attributes of a selected plurality of entities.

In another aspect, the present invention provides a system for generating a new tariff and/or billing configuration for a tariff and/or billing plan by use of an entity framework for a hierarchical arrangement of entities, the hierarchical arrangement representing a tariff and/or billing configuration, with each entity having attributes representing one or more characteristics of the configuration, the system including a computer generated graphical user interface including a display on which entities are represented as graphical objects, the display including a selection area for representing an existing hierarchical arrangement of entities, a design area for representing a new hierarchical arrangement of entities, and a selection means enabling an operator to select at least one entity, wherein the system enables the operator to populate the entity framework by copying a selected existing entity and/or generating a new entity in the design area.

In an embodiment, the system enables the operator to populate the entity framework by copying a plurality of selected existing entities and/or generating a plurality of new entities in the design area. The selection means may enable selection of an existing hierarchical arrangement of entities.

In yet another embodiment, the system enables the operator to populate the entity framework by copying a selected existing hierarchical arrangement of entities and/or generating a new hierarchical arrangement of entities in the design area. The system may enable the operator to delete an at least one child entity from a parent entity in the design area.

In another embodiment, the selection and copying means is a "drag and drop" function. In this embodiment the operator "drags" a selected existing entity from the selection area and "drops" the existing entity into a design area.

In an embodiment, the display further includes a details area wherein one or more values of attributes of a selected entity are created and/or modified. Alternatively, in this embodiment, the operator may select any one or more of a parent entity and/or child entities of the parent entity wherein one or more values of attributes of the selected entities are created and/or modified in the details area.

The system may also include a batch selection means for selecting a plurality of entities each having a same attribute having a same or similar value, wherein the batch selection means allows the attribute for each selected entity to be modified. Alternatively, another attribute for each selected entity may be created and/or modified.

In yet another embodiment, the system further includes a script generating means for generating a configuration script for the new tariff and/or billing configuration represented by computer program code.

In another embodiment, the system further includes a validation means for validating a configuration. In this exemplary embodiment the system may conduct a range of validation checks to determine whether a proposed configuration contains any errors by comparing the proposed configuration with system rules. In the event that any system rules are violated, the operator is provided with a warning regarding the errors in the proposed configuration.

In another exemplary embodiment, an entity may be any one of a "package", a "product", a "component" or a "component member". In this embodiment the package entity may be a parent entity, the product entity may be a child entity of the package entity, the component entity may be a child entity of the package entity and the component member entity may be a child entity of the component entity.

According to another aspect, a computer program product is provided. The computer program product may comprise computer-readable instructions which may be stored on a computer-readable medium or provided as a data signal, such that when the instructions are loaded and executed on a device the instructions cause the device to perform operations according to the method of any one of the preceding claims.

The techniques described herein maybe embodied by stored, executable instructions that are executed by one or more suitable processing devices such as personal or server computers. The executable instructions may result in computer instructions that are implemented internally to a computer or over a network using separate software segments. The executable instructions may also include segments of the existing software that effect functions in cooperation with dedicated segments of computer instruction code developed specifically for the present invention.

In an exemplary embodiment, the interface with an operator is a web-enabled interface that is implemented on a device connected to a data communications network such as the internet.

### BRIEF DESCRIPTION OF THE DRAWINGS

One or more embodiments of the present invention are described below with reference to the accompanying figures in which:
Fig. 1 is a block diagram detailing the conceptual layers of a proposed solution architecture according to one embodiment of the invention;
Fig. 2 is a summary level flow chart of steps involved in the generation of a new tariff and/or billing configuration according to one embodiment of the invention;
Fig. 3 is a screen shot of a display presented to an operator for generation of configurations in one embodiment of the invention;
Figs. 4a, 4b and 4c are screen shots illustrating an exemplary embodiment of generating a new configuration by adding an existing entity to a hierarchical arrangement of entities;
Fig. 5 is a screen shot of a details area for a package;
Fig. 6 is a screen shot illustrating deletion of an entity from a hierarchical arrangement of entities;
Fig. 7 is a screen shot of a details area for a product entity with the "Rate" tab selected;
Fig. 8 is a screen shot of a details area for a component with the "Rate" tab selected;
Fig 9 is a screen shot showing operation of the system in "Rate Usage" mode.
Fig. 10 is a screen shot showing operation of the system in "Corridor Plan" mode.
Fig. 11 is a screen shot showing operation of the "Save As" function.

### DESCRIPTION OF EMBODIMENTS OF THE INVENTION

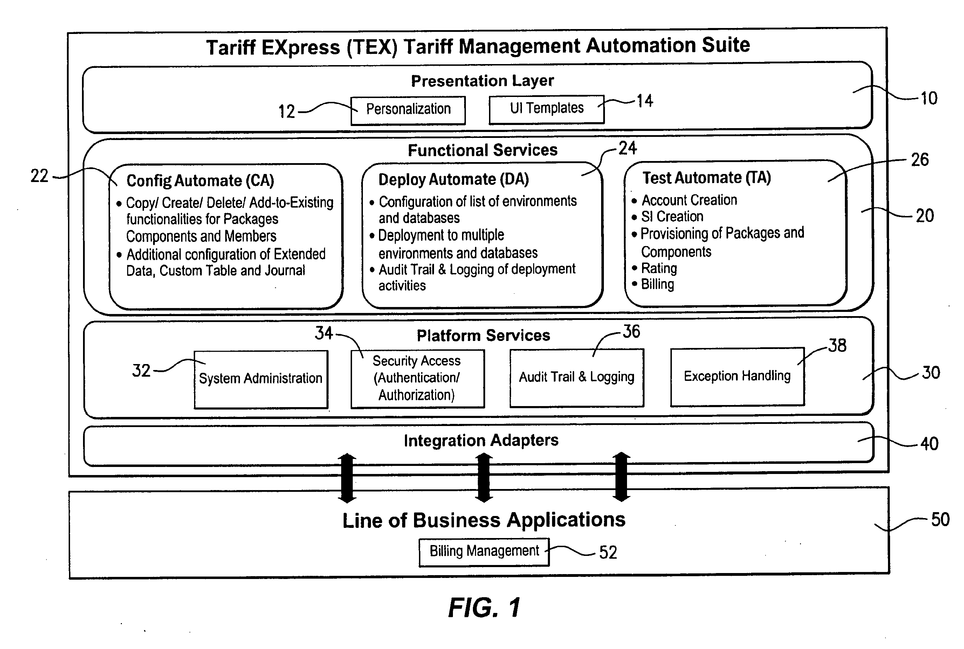

With reference to Figure 1, a block diagram detailing the conceptual layers of a solution architecture is shown. In this solution architecture, the primary conceptual layers include a presentation layer (10), a functional services layer (20), a platform services layer (30), an integration adapters layer (40) and the tariff management automation suite including these layers interfaces with a range of existing business applications (50).

The presentation layer (10) includes a personalization application (12) and user interface (UI) templates (14).

The functional services layer (20) includes software for performing the functions of configuration automation (22), a deployment automation (24) and test automation (26). The user interface templates (14) and personalization application (12) provided in the presentation layer (10) interface with each of the automation functional services (22, 24 and 26) as defined in the functional services layer (20) thus affording operators a consistent user interface experience when invoking functions from any of the automation components in the functional services layer (20).

The tariff management automation suite as depicted in Figure 1 also includes a platform services layer (30) which includes a system administration component (32), a security access component (34), and audit trail and logging component (36) and an exception handling component (38).

Software components residing in the integration adapters layer (40) enable the functional components of the tariff management automation suite to interface with existing business applications of the telecommunications service provider. As an example, in Figure 1, the business applications layer (50) includes a functional software component (52) in the form of a billing management software program.

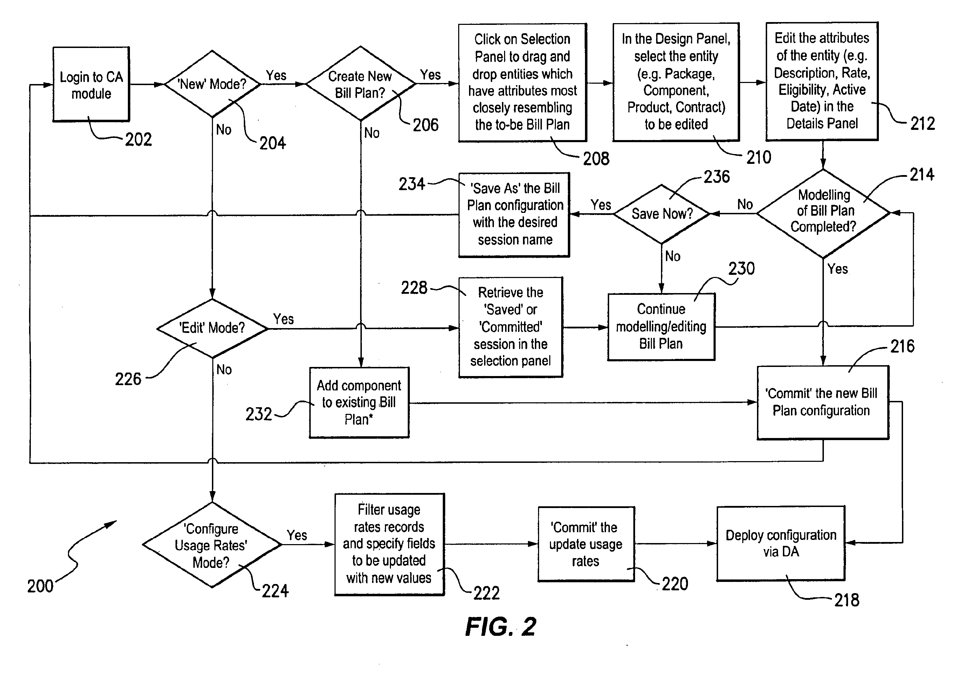

Figure 2 provides a summary level flow chart showing the steps involved, in one embodiment, with generating a tariff and/or billing configuration. In this exemplary embodiment an operator may log in to the system, which may be called a configuration automation (CA) module. This may be a part of a larger computer program to handle configuration, deployment and testing of new tariff and/or billing configurations (202).

When the operator has logged in to the CA module they may choose to operate in different modes including:
- the "New Mode" - where new configurations can be created;
- the "Edit Mode" - where existing configurations and/or saved partially completed configurations can be edited;
- the "Usage Rates" mode - where usage rates can be configured, and;
- the "Corridor Plan" mode - where corridor plans can be configured.

Modes may be selected by a button, a link or a drop-down menu or by any other means.

In the new mode (204) the operator may choose to create a new tariff and/or billing configuration. When creating a new tariff and/or billing configuration, the operator may click on the selection area to drag and drop entities which have attributes most closely resembling the tariff and/or billing configuration (billing configuration) that the operator proposes to create (208). The entities are dragged and dropped to the design area and here the operator may select the entity (for example a package, a component, a product or a contract) which the operator proposes to edit (210). Once the entity has been selected the user may edit the attributes of the entity (for example the description, the rate, the eligibility, or the active date) in the details area (212).

If, at this stage the modeling of the billing configuration has been completed (214), then the operator may commit the new billing configuration (216) so that the billing configuration can be deployed. This may optionally be done via a deployment automation module (218).

If the modeling of the billing configuration has not been completed (214), then the operator may wish to save the billing configuration at that point (236). The operator may save the billing configuration with a desired session name (234). Alternatively, the operator may not wish to save the billing configuration at that time (236) in which case the operator may continue modeling or editing the billing configuration (230) until the modeling of the billing configuration is completed (214).

The operator may not wish to create a new billing configuration (206) but may add a component to an existing billing configuration (232). When the operator has added the component to an existing billing configuration the billing configuration can be committed (216) and deployed via the DA (218).

The operator may operate in edit mode (226) where they may retrieve a saved or committed session into the selection area (228) and thereafter continue modeling or editing the tariff and/or billing configuration (230). The operator may continue modeling or editing the tariff and/or billing configuration until it is completed and may commit the new billing configuration and deploy same via the DA (218).

A further alternative is to operate in the configure usage rates mode (224) wherein the operator may filter usage rates records and/or specify fields to be updated with new values (222). When the operator has finished configuring the usage rates they may be committed (220) and then deployed via the DA (218).

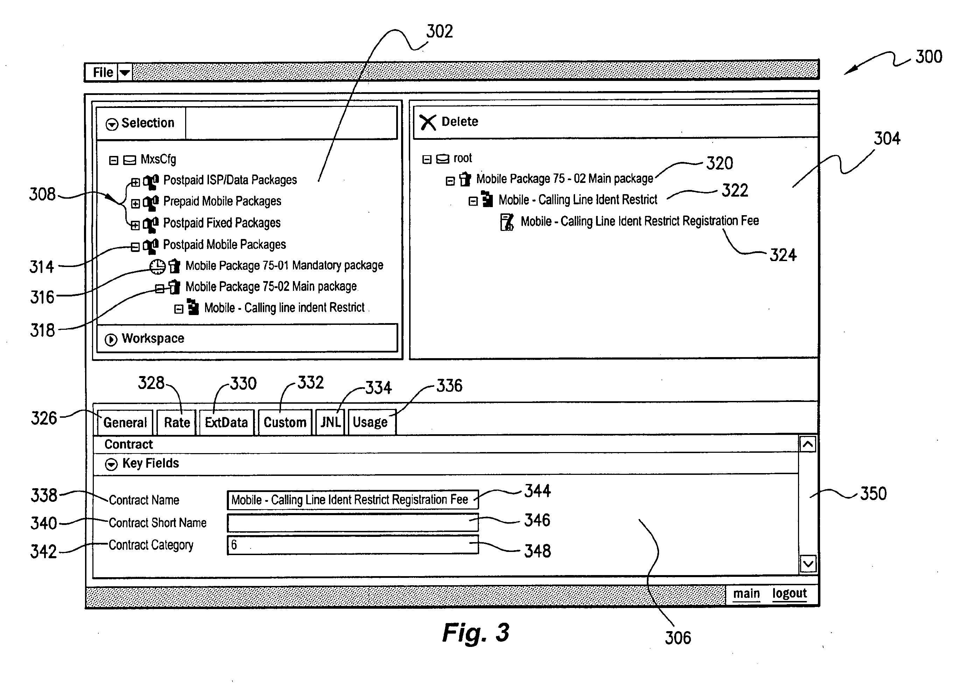

Figure 3 is a screen shot (300) of one display presented to an operator in one embodiment of the invention. In the screen shot (300) there is shown a selection area (302) a design area (304) and a details area (306). The selection area (302) is a panel towards the top left side of the screen and shows a number of hierarchical arrangement of entities, which are packages for tariff and/or billing configurations. In this example, the packages are for a telecommunications tariff and/or billing configuration. There are a number of packages (308) which are shown as being collapsed, wherein a "+" indicates that the hierarchy of the entities is showing in its collapsed form. Below these packages shown in collapsed form (308) there is a package ("Post Paid Mobile Package") which is shown in its expanded form (314), which is indicated with a "-". In this expanded tree form of the package (314) there is a child entity to the parent entity package (316) and another child entity to the parent package entity (318). The child entities (316, 318) are themselves packages for the "Post Paid Mobile Package". The hierarchical arrangement for the "Post Paid Mobile Package" (314) may also have other child entities, which themselves may have further child entities.

In this example, the child entity "Mobile Package 75-02 Main Package" (318) has been selected by the selection means (not shown) which may be a mouse operated pointer. As the "Mobile Package 75-01 Mandatory Package" entity (316) has been selected it is displayed in the design panel (304) as a graphical object (320). This is displayed in expanded form showing a child entity "Mobile - Calling Line Ident. Restrict." (322) which itself has a child entity "Mobile - Calling Line Ident. Restrict. Registration Fee" (324). The "Mobile - Calling Line Ident. Restrict." entity (322) is a product and the "Mobile - Calling Line Ident. Restrict. Registration Fee" entity (324) is a component-member.

In this example, the "Mobile - Calling Line Ident. Restrict. Registration Fee" entity (324) has been selected by the selection means from the design panel (304). This causes the attributes of this entity to be displayed in the details area (306). The details area has a number of tabbed panels, in this example, including the "General" tab (326), the "Rate" tab (328), the "ExtData" tab (330), the "Custom" tab (332), the "JNL" tab (334) and the "Usage" tab (336). In this example screen show the general tab has been selected by the selecting means, which shows some attributes of the "Mobile - Calling Line Ident. Restrict. Registration Fee" entity (324) including: "Contract Name" (338), "Contract Short Name" (340) and "Contract Category" (342). Further attributes may be displayed in the panel which are hidden if there are too many to be displayed with the given screen space and these can be accessed by operation of a scroll bar (350). The values of the attributes are displayed next to the attribute labels (338, 340, 342) including the contract name which has a value "Mobile - Calling Line Ident. Restrict. Registration Fee" (344), the "Contract Short Name" (340) is displayed without a value (346) and the "Contract Category" (342) is displayed with a value of "6" (348).

The other tabbed panels in the details area (306) are:
- "Rate" (328) which shows the rate at which a particular product is charged;
- "ExtData" (330), which shows extended data being extra information for an entity. This information may be stored in a separate table in a data base. The extended data may be data that is not associated with the configuration, but is not required for the configuration;
- "Custom" (332), which is a tabbed panel that has attributes that allow the system to store data in a non standard table in a data base. This custom attribute information may be useful or necessary where the system is being used with certain tariff and/or billing systems;
- "JNL" (334) is an abbreviation for the word "journal". This contains attributes which can be used for an accounting journal which is a record keeping of finances for capturing charges of the product to a particular accounting code. For instance, the accounting code could be a debit code or a credit code. The desired accounting code can be entered by an operator as a value for an attribute contained within this tab, and;
- "Usage" (336) - the functionality under this tab will be further explained below.

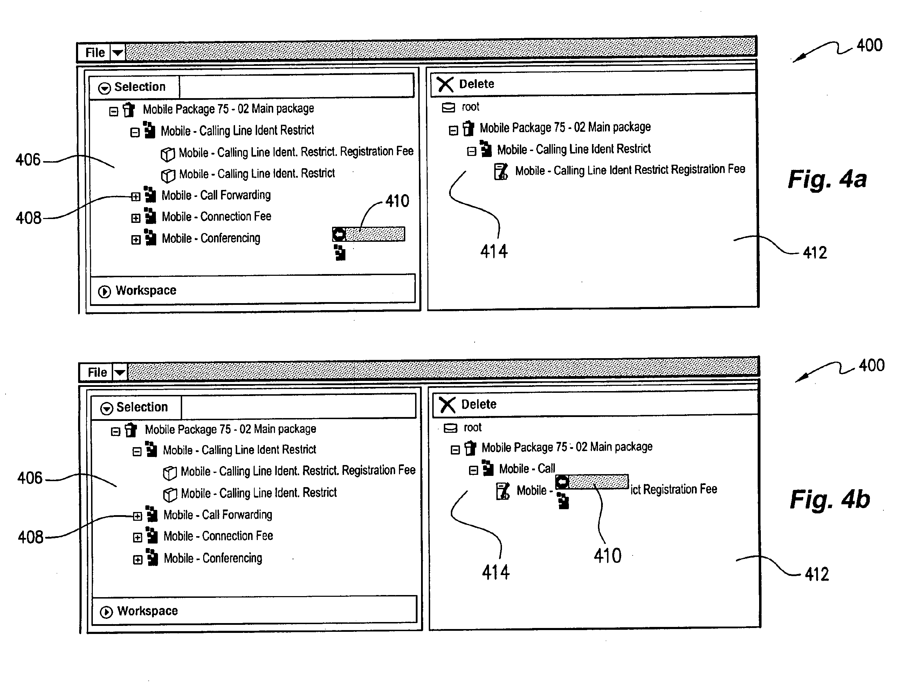

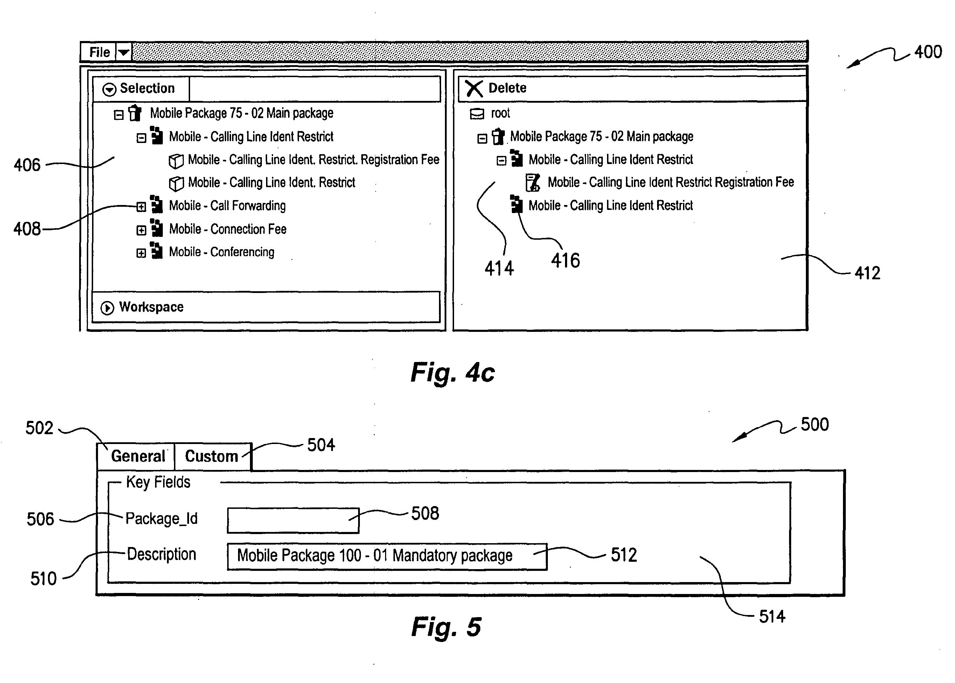

Figures 4a, 4b and 4c illustrate an embodiment of one method for populating an entity framework by copying an existing entity.

In Figure 4a there is shown a part of the screen including the selection area (406) and the design area (412). In the selection area a product entity "Mobile - Call Forwarding" (408) has been selected by the selecting means. In this example embodiment a small floating panel appears on the screen (410) which indicates that the entity has been selected and can be dragged and dropped into the design area. This may be indicated by showing the top bar of the floating panel (410) with a certain colour, for example, red.

The "Mobile - Call Forwarding" product entity (408) can be dragged and dropped into the design area (412) in which there is displayed a hierarchical arrangement of entities for the "Mobile Package 75-02 Main Package" entity (414). When the entity (408) is dragged to the design area (412) the floating panel (410) may display a different colour, for example green, in its top bar to indicate that this is an allowable configuration under the system rules. This is an example of how validation may be implemented in the system.

Figure 4c shows a new copy of the "Mobile - Calling Line Indent Restrict" product entity (416) situated in the hierarchical arrangement of entities (414) in the design area (412).

Figure 5 shows an example screen shot for the details area when a package entity "Mobile Package 100-01 Mandatory Package" has been selected by the selecting means (500). In this screen shot of the details area (500) there is shown a "General" tab (502) and a "Custom" tab (504). The details area (500) is shown with the "General" tab (502) selected. The tab panel (514) shows attributes including a "Package_ID" (506) and a "Description" (510). The "Package_ID" attribute (506) is shown as not having a value entered (508) and the "Description" attribute (508) is shown with the name of the package displayed (512).

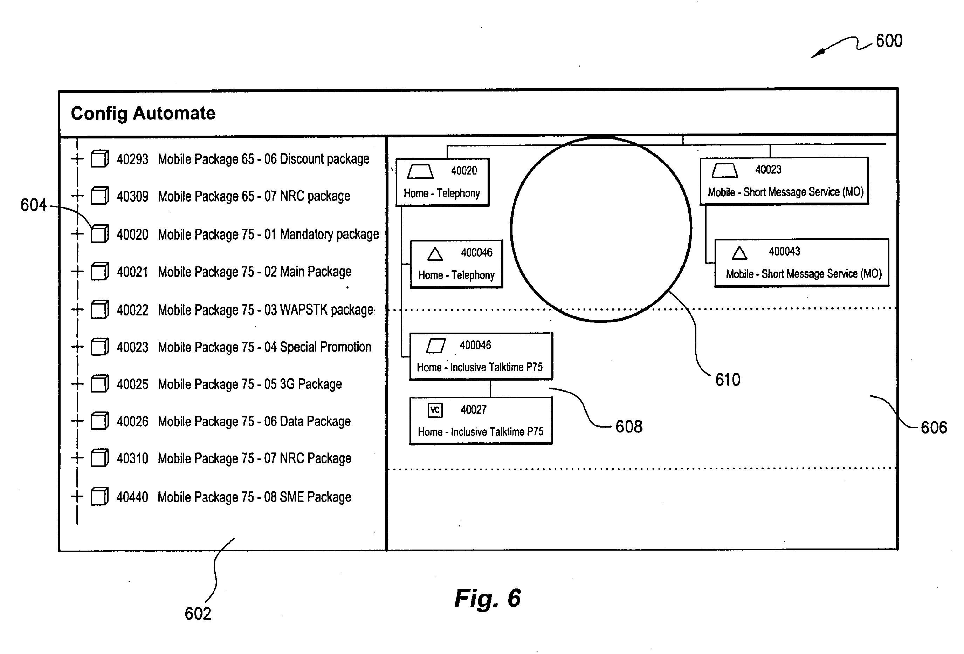

Figure 6 shows a screen shot demonstrating an embodiment of one method step where an entity or a hierarchical arrangement of entities has been deleted from a hierarchical arrangement of entities. In this screen shot (600) there is shown the selection area (602) and the design area (606). The hierarchical arrangement of entities "40020 Mobile Package 75-01 Mandatory Package" (604) has been selected by the selecting means in the selection area (602) and displays in the design area (606) as an expanded tree representation of the hierarchical arrangement of entities (608). In this example, the operator has selected and deleted an entity which is then disappeared from the display of the expanded tree of the hierarchical arrangement of entities. The screen area where the selected and deleted entity has been disappeared is indicated by a circle (610).

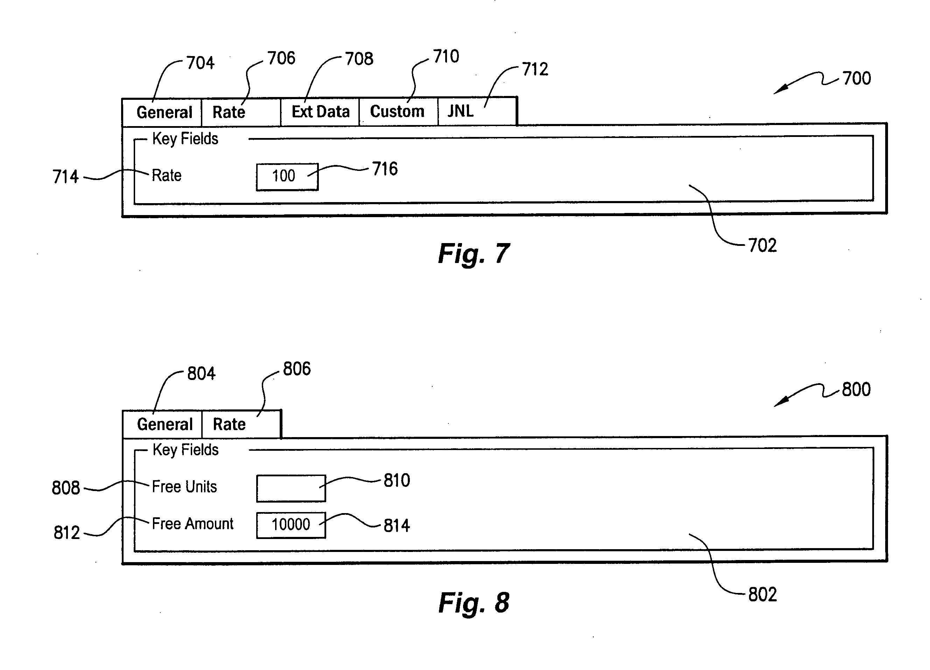

Figure 7 shows a display from the details area (700) with tabbed panels including; a "General" tab (704), a "Rate" tab (706), a "ExtData" tab (708), a "Custom" tab (710) and a "JNL" tab (712). In this example, the rate tab (706) has been selected and on this tab panel (702) there is a single attribute displayed which is the rate (714). This attribute is displayed having a value of 100 (716).

Figure 8 shows another example of the design area illustrating how attributes may be displayed for a selected entity. In this example, there are two tabbed panels the "General" tab (804) and the "Rate" tab (806). The "Rate" tab has been selected and the panel for this tab (802) shows two attributes, being "Free Units" (808) and "Free Amount" (812). The "Free Units" attribute is displayed having no value (810) and the "Free Amount" attribute is displayed having a value of 10000 (814).

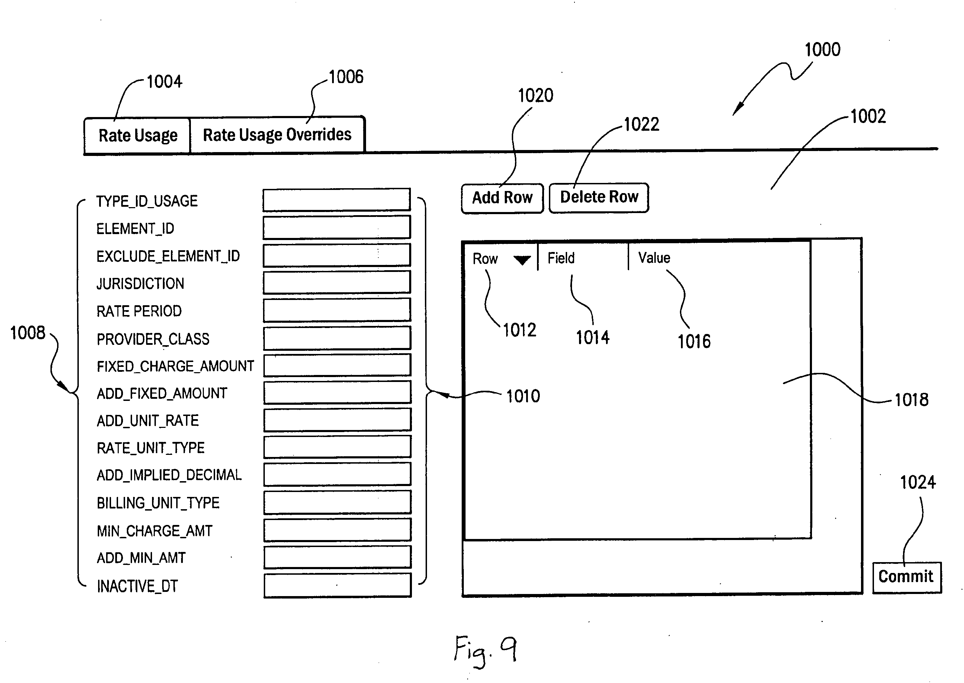

Figure 9 shows an embodiment for providing rate usage updates which illustrate a screen when the system is used in rate usage mode (refer to Figure 2).

In a telecommunication system this may be quite useful when there is a change to the rates for a short period of time, for example Christmas, but it is not desired to create a whole new plan to suit this special rate usage period. Instead, an operator may use this rate usage mode to make a temporary change to the rate usage for this period.

The screen shot in Figure 9 (1000) shows a tabbed panel screen with a "Rate Usage" tab (1004) and a "Rate Usage Overrides" tab (1006). In this screen shot (1000) the "Rate Usage" tab (1004) has been selected. This displays the "Rate Usage" panel (1002) which has a number of attributes displayed (1008) with fields for entering the attribute values (1010). An operator may desire to add a row and would click the add row button (1020) or may delete a row by clicking the delete row button (1022).

When the operator adds a row the row number (1012), the field (1014) and the value (1016) are displayed in a table (1018). When the operator has finished entering data into this panel the commit button (1024) can be pressed, which will commit this data for deployment.

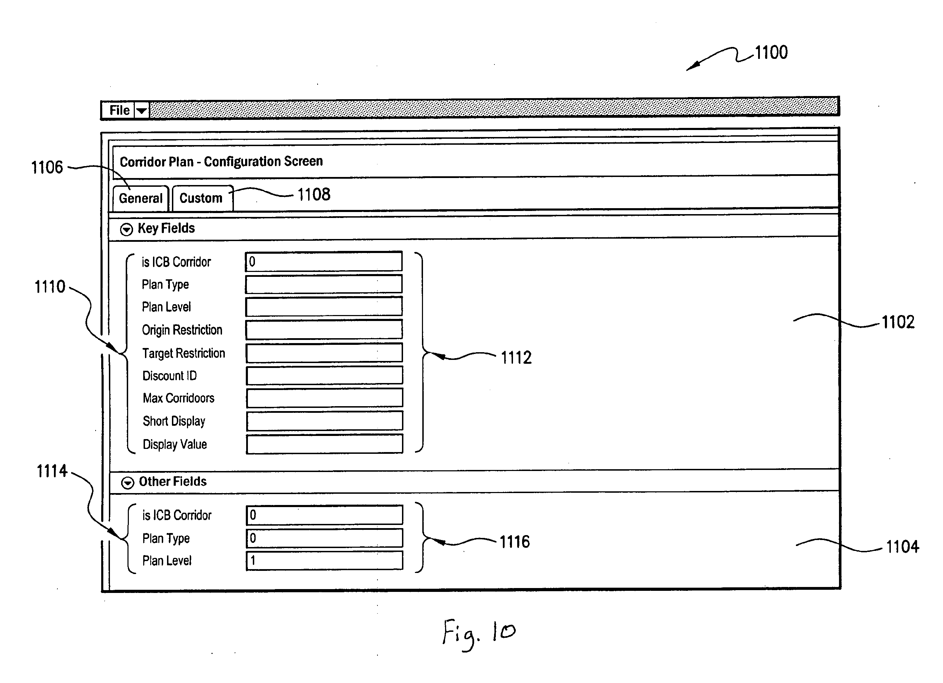

Figure 10 shows a screen shot for an embodiment of the "Corridor Plan" mode (1100). This screen has two tabbed panels: the "General" tab (1106) and the "Custom" tab (1108). In this example the "General" tab has been selected which displays the "Key Fields" panel area (1102) and the "Other Fields" panel area (1104).

The "Key Fields" panel area (1102) displays a number of attributes (1110) with fields for entering the attribute values (1112). The "Other Fields" panel area (1104) displays a number of attributes (1114) with areas for entering the attribute values (1116).

A corridor plan in a telecommunications tariff and/or billing system enables, for example, a customer's five preferred telephone numbers to be discounted or other such benefits to be awarded. This is achieved by grouping the characteristics for the corridor plan such as, for example, phone numbers, call to areas, or other such characteristics.

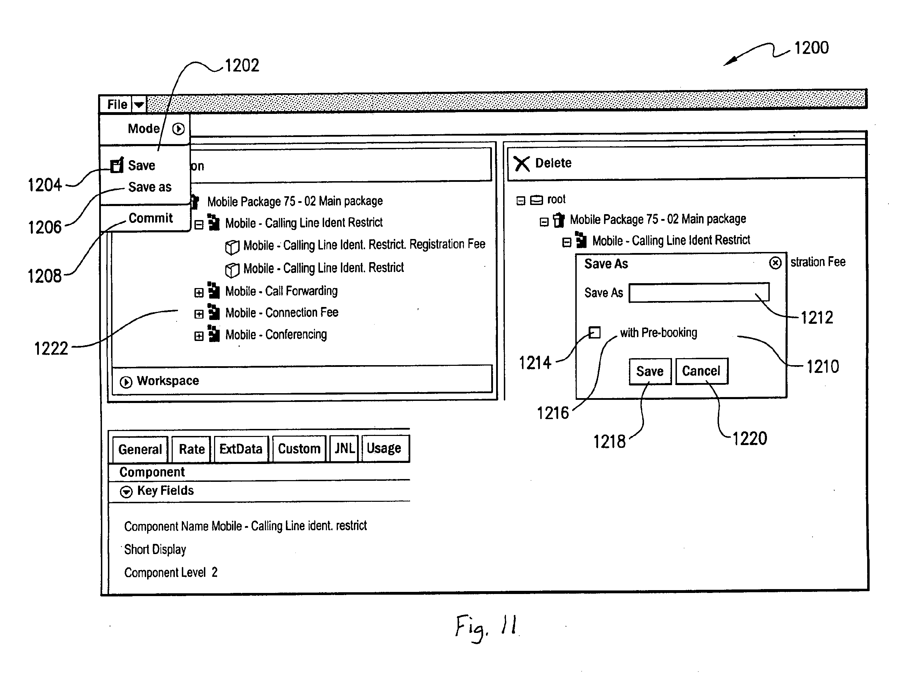

Figure 11 shows a screen shot (1200) which illustrates an example of how an operator may save a configuration that has been generated by the operator. This may occur where an operator has partially completed generation of a configuration or where the operator has completed the configuration but does not wish to yet deploy the configuration. In this example, a drop down menu (1202) can be made to appear which shows, amongst other options, a "Save" option (1204), a "Save As" option (1206) and a "Commit" option (1208).

The "Save" option (1204) will save a configuration where that configuration has already been given a name. The "Save As" option (1206) enables the operator to give the configuration a name or to save the configuration under a new name. The "Commit" option (1208) enables the operator to commit the configuration which may then be deployed by a Deployment Automation (DA) module.

In this example, the "Save As" option (1206) has been selected which causes a save as panel to appear (1210) on the screen. In this panel there is shown a field for entering the save as name (1212) a save button (1218), which the operator presses when the save as name has been entered, a cancel button (1220) which the operator may press if it is desired to cancel the save as operation. Also shown on the save as panel (1210) is a prebooking option (1216) with an option select box (1214). This prebooking option enables the prebooking of a row ID, or similar identifying element, for a data base table.

In one option, saved and/or committed configuration may be displayed in the selection panel (1222). These may be highlighted in some way as being saved or committed configurations.

When a configuration has been generated, the system may then produce computer program code which is used to deploy the configuration. The deployment may be handled by a Deployment Automation (DA) module. This computer program code may be Structured Query Language (SQL) for a relational data base or other types of computer program code.

In another embodiment, there is further provided a method step of validating a generated configuration. This validation step may occur when a new entity is created or an existing entity is modified. Validation may also occur at a time when a hierarchical arrangement of entities has been newly created or when an existing hierarchical arrangement of entities has been modified. Further, validation may occur when one or more child entities are deleted from a hierarchical arrangement of entities or when child entities are added to an existing hierarchical arrangement of entities. In yet another alternative example of this embodiment, validation may occur before or after generation of the configuration script represented by computer program code.

A validity check, for example, could be an eligibility check. This is used to ensure that an entity added or proposed to be added to a package for a configuration is consistent with the category of customer for that package. If the entity, for example a particular type of discount, is not compatible with the customer for which the package is designed, for example a domestic customer, then the validation means will alert the operator that this entity (the discount) cannot be used in this hierarchical arrangement of entities (the package).

## Claims

1. A computer implemented method of generating a new tariff and/or billing configuration for a tariff and/or billing plan on a computer based system using an entity framework for a hierarchical arrangement of entities, the hierarchical arrangement representing a tariff and/or billing configuration, with each entity representing one or more characteristics of the configuration, the method including the step of:
populating the entity framework by copying an existing entity and/or generating a new entity.

2. A computer implemented method according to claim 1 wherein the step of populating the entity framework includes copying a plurality of existing entities and/or creating a new plurality of entities.

3. A computer implemented method according to either claim 1 or claim 2 wherein the step of populating the entity framework includes copying an existing hierarchical arrangement of entities and/or creating a new hierarchical arrangement of entities.

4. A system for generating a new tariff and/or billing configuration for a tariff and/or billing plan using an entity framework for a hierarchical arrangement of entities, the hierarchical arrangement representing a tariff and/or billing configuration, with each entity having attributes representing one or more characteristics of the configuration, the system including:
a computer generated graphical user interface including a display (300) on which entities are represented as graphical objects, the display (300) including:
a selection area (302) for representing an existing hierarchical arrangement of entities, and;
a design area (304) for representing a new hierarchical arrangement of entities, and
a selection means enabling an operator to select at least one entity, wherein the system enables the operator to populate the entity framework by copying an existing entity and/or generating a new entity in the design area (304).

5. A system according to claim 4, wherein the system includes a copy and/or generation means that enables the operator to populate the entity framework by copying a plurality of selected existing entities and/or generating a plurality of new entities in the design area (304).

6. A system according to either claim 4 or claim 5, wherein the selection means enables selection of an existing hierarchical arrangement of entities.

7. A system according to any one of claims 4 to 6, including a copy and/or generation means that enables the operator to populate the entity framework by copying a selected existing hierarchical arrangement of entities and/or generating a new hierarchical arrangement of entities in the design area (304).

8. A system according to any one of claims 4 to 7, including a deletion means to further enable the operator to delete an at least one child entity (316, 318) from a parent entity (314) in the design area (304).

9. A system according to any one of claims 4 to 8, wherein the selection and copying means is a drag and drop means and the operator drags a selected existing entity from the selection area (302) and drops the existing entity into a design area (304).

10. A system according to any one of claims 4 to 9, wherein the display further includes a details area (306) wherein one or more attributes of a selected entity are created and/or modified.

11. A system according to any one of claims 4 to 10, further including a batch selection means for selecting a plurality of entities each having a same attribute having a same or similar value, wherein the batch selection means allows the attribute for each selected entity to be modified.

12. A system according to claim 11 wherein another attribute for each selected entity is created and/or modified.

13. A system according to any one of claims 4 to 12, further including a validation means for validating a configuration.

14. A system according to any one of claims 4 to 13, further including a script generating means for generating a configuration script for the new tariff and/or billing configuration represented by computer program code.

15. A system according to any one of claims 4 to 14, wherein an entity is any one of a "package", a "product", a "component" or a "component member".
